(19) Europäisches Patentamt
European Patent Office
Office européen des brevets

(11) **EP 2 311 182 B1**

(12) **FASCICULE DE BREVET EUROPEEN**

(45) Date de publication et mention
de la délivrance du brevet:
**30.10.2019 Bulletin 2019/44**

(21) Numéro de dépôt: **09772680.6**

(22) Date de dépôt: **27.05.2009**

(51) Int Cl.:
*H02P 9/24* (2006.01)          *H02J 7/14* (2006.01)
*H02P 6/14* (2016.01)

(86) Numéro de dépôt international:
**PCT/FR2009/050989**

(87) Numéro de publication internationale:
**WO 2010/000997 (07.01.2010 Gazette 2010/01)**

(54) **PROCEDE POUR COMMANDER UNE MACHINE ELECTRIQUE TOURNANTE, NOTAMMENT UN ALTERNATEUR**

VERFAHREN ZUM REGELN EINER SICH DREHENDEN ELEKTRISCHEN MASCHINE, INSBESONDERE EINES STROMGENERATORS

METHOD FOR CONTROLLING A ROTATING ELECTRIC MACHINE, PARTICULARLY AN ALTERNATOR

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **02.07.2008 FR 0854473**

(43) Date de publication de la demande:
**20.04.2011 Bulletin 2011/16**

(73) Titulaire: **VALEO EQUIPEMENTS ELECTRIQUES MOTEUR**
**94056 Créteil Cedex (FR)**

(72) Inventeurs:
• **TISSERAND, Pierre**
**F-94450 Limeil Brevannes (FR)**
• **CHASSARD, Pierre**
**F-94000 Creteil (FR)**

(74) Mandataire: **de Lambilly Delorme, Marie Pierre**
**Valéo Equipements Electriques Moteur**
**Propriété Industrielle**
**2, rue André-Boulle**
**94046 Créteil Cedex (FR)**

(56) Documents cités:
**EP-A- 0 106 539      EP-A- 0 201 243**
**EP-A- 0 421 332      EP-A- 0 611 215**

**Description**

L'invention concerne notamment un procédé pour commander une machine électrique tournante, notamment un alternateur ou un alterno-démarreur de véhicule automobile, et un dispositif pour mettre en œuvre un tel procédé.

On connaît par les demandes de brevet FR 2 803 447, EP0201243, EP0106539, et EP0611215 décrivant un système de génération de puissance pour un réseau de bord de véhicule automobile. Ce système comporte un alternateur triphasé associé à un onduleur triphasé. Des moyens électroniques de commande réalisent la régulation de tension par modulation de la largeur d'impulsions de commande.

D'une manière générale, et notamment dans des systèmes du type précité, il est nécessaire de maintenir la tension du réseau de bord à une valeur souhaitée, par exemple à environ 14 Volts.

Lorsque le véhicule automobile est à l'arrêt (moteur à combustion en fonctionnement), l'alternateur tourne à vitesse réduite, par exemple à environ 800 tours/minute, pour minimiser la consommation d'essence.

Un appel important de charge électrique, notamment suite à une mise en marche d'un consommateur électrique du réseau de bord tel que le système de climatisation, entraîne alors un appel de couple qui peut être excessif et provoquer un calage du moteur à combustion.

Afin d'éviter un appel de couple excessif pouvant provoquer un calage du moteur à combustion, l'alternateur est commandé pour augmenter le courant de sortie de l'alternateur d'abord suivant un palier ou saut choisi pour fournir un courant minimum suffisant de manière contrôlée au moment de l'appel de charge, puis de manière progressive suivant une certaine pente, jusqu'à atteindre la tension de régulation requise pour satisfaire l'appel de charge.

L'invention vise notamment à améliorer la commande d'une machine électrique tournante dans le contexte décrit ci-dessus.

L'invention a ainsi pour objet un procédé pour commander une machine électrique tournante suivant la revendication 1, notamment un alternateur ou un alterno-démarreur de véhicule automobile, la machine électrique étant capable de fournir un courant électrique dont l'intensité varie en fonction de signaux d'excitation, un rapport cyclique étant associé à chaque signal d'excitation, le procédé comportant les étapes suivantes :

- comparer la différence entre les valeurs de rapport cyclique de deux signaux d'excitation consécutifs à un seuil prédéterminé,
- si ladite différence est supérieure au seuil prédéterminé, déclencher une phase de réponse progressive durant laquelle le rapport cyclique des signaux d'excitation est augmenté progressivement, notamment de manière sensiblement linéaire.

Grâce à l'invention, la commande de la machine électrique tournante peut s'appuyer, le cas échéant, sur un traitement numérique des données (notamment des signaux d'excitation), qui peut s'avérer meilleur qu'un traitement analogique utilisant par exemple une valeur de chute de tension aux bornes de la machine.

La phase de réponse progressive permet d'augmenter sensiblement linéairement le courant d'excitation du rotor afin de contrôler le courant de sortie de l'alternateur et, par conséquent, le couple.

Le seuil de déclenchement de la phase de réponse progressive est de préférence choisi suffisamment élevé pour éviter un déclenchement de la phase de réponse progressive consécutivement à un bruit affectant les signaux d'excitation.

Ce seuil peut également être choisi en fonction de spécifications d'un constructeur automobile.

De préférence, le procédé selon l'invention comporte les étapes suivantes :

- en début de la phase de réponse progressive, faire augmenter le rapport cyclique de signaux d'excitation consécutifs d'un saut prédéterminé,
- puis faire augmenter le rapport cyclique de manière progressive.

Le saut de rapport cyclique peut, le cas échéant, être d'amplitude nulle.

Grâce à l'invention, le seuil de déclenchement de la phase de réponse progressive et le saut de rapport cyclique en début de cette phase peuvent être découplés de sorte qu'il est possible, si on le souhaite, d'améliorer la régulation du couple sur la véhicule.

De préférence, le saut de rapport cyclique en début de phase de réponse progressive est plus faible ou égal que le seuil de déclenchement de la phase de réponse progressive.

Par exemple le seuil de déclenchement peut être fixé à 10% et le saut de rapport cyclique à 7%.

Le saut de rapport cyclique peut être fixe ou, en variante, être variable en fonction par exemple de besoins du réseau de bord.

Le saut du rapport cyclique en début de phase de réponse progressive est par exemple inférieur à 4/5, notamment à ½, du seuil de déclenchement de la phase de réponse progressive.

Dans un exemple de mise en oeuvre de l'invention, le seuil de déclenchement de la phase de réponse progressive correspond à une augmentation d'au moins 10%, notamment 20%, du rapport cyclique entre deux signaux d'excitation consécutifs.

La machine électrique tournante étant reliée électriquement à au moins un consommateur électrique, le procédé peut comporter les étape suivantes :

- lorsqu'un appel de charge pour alimenter le consommateur électrique est détecté, faire augmenter le rapport cyclique des signaux d'excitation,

- comparer la différence entre les valeurs de rapport cyclique de deux signaux d'excitation consécutifs ainsi augmentées lors de l'étape précédente, au seuil prédéterminé de déclenchement de la phase de réponse progressive.

Dans un exemple de mise en oeuvre de l'invention, le procédé comporte les étapes suivantes :

- détecter une différence positive entre les valeurs de rapport cyclique de deux signaux d'excitation consécutifs, cette différence étant inférieure au seuil de déclenchement de la phase de réponse progressive, puis
- faire augmenter le rapport cyclique d'un saut correspondant à la différence positive, sans déclencher la phase de réponse progressive.

La machine électrique tournante étant associée à un moteur à combustion interne de véhicule automobile, la phase de réponse progressive est avantageusement déclenchée uniquement lorsque la machine électrique tournante fonctionne en mode ralenti.

Si on le souhaite, les signaux d'excitation utilisés pour la comparaison avec le seuil de déclenchement de la phase de réponse progressive sont issus d'un filtre, notamment d'un filtre passe-bas.

Ceci permet d'avoir une comparaison précise et fiable.

L'invention a également pour objet un dispositif de commande d'une machine électrique tournante, notamment un alternateur ou un alterno-démarreur de véhicule automobile, la machine électrique étant capable de fournir un courant électrique dont l'intensité varie en fonction de signaux d'excitation délivrés par le dispositif de commande, un rapport cyclique étant associé à chaque signal d'excitation, le dispositif étant agencé pour comparer la différence entre les valeurs de rapport cyclique de deux signaux d'excitation consécutifs à un seuil prédéterminé et, si ladite différence est supérieure au seuil prédéterminé, initier une phase de réponse progressive durant laquelle le rapport cyclique des signaux d'excitation est augmenté progressivement.

Dans un exemple de mise en oeuvre de l'invention, le dispositif comporte un amplificateur différentiel agencé pour délivrer une information d'erreur représentative de la différence entre une consigne et une valeur de tension à une borne de la machine électrique tournante.

Le cas échéant, le dispositif comporte un générateur de signaux d'excitation agencé pour délivrer des signaux d'excitation dont le rapport cyclique varie, notamment en fonction d'une information d'erreur fournie par un amplificateur différentiel.

Avantageusement le dispositif comporte un module agencé pour comparer la différence entre les valeurs de rapport cyclique de deux signaux d'excitation consécutifs provenant du générateur de signaux, au seuil prédéterminé et, si ladite différence est supérieure au seuil prédéterminé, initier une phase de réponse progressive durant laquelle le rapport cyclique des signaux d'excitation est augmenté progressivement.

Dans un exemple de mise en oeuvre de l'invention, le module est agencé pour commander un multiplexeur de manière à :

- si la différence entre les valeurs de rapport cyclique de deux signaux d'excitation consécutifs provenant du générateur de signaux est supérieure au seuil de déclenchement de la phase de réponse progressive, commander le multiplexeur de sorte que celui-ci permette le déclenchement de la phase de réponse progressive,
- si la différence entre les valeurs de rapport cyclique de deux signaux d'excitation consécutifs provenant du générateur de signaux est inférieure au seuil de déclenchement de la phase de réponse progressive, commander le multiplexeur de sorte que celui-ci permette une régulation normale de l'alternateur.

Si on le souhaite, le dispositif comporte un étage de puissance en aval du multiplexeur et connecté à la machine électrique tournante pour commander celle-ci, notamment en agissant sur l'excitation du rotor de la machine, en fonction de signaux d'excitation fournis par le multiplexeur.

L'invention pourra être mieux comprise à la lecture de la description détaillée qui va suivre, d'un exemple de mise en œuvre non limitatif de l'invention, et à l'examen du dessin annexé, sur lequel :

- la figure 1 représente, schématiquement et partiellement, un dispositif conforme à l'invention, associé à une machine électrique tournante,
- la figure 2 représente, schématiquement et partiellement, des éléments du dispositif de la figure 1,
- la figure 3 illustre schématiquement des signaux d'excitation générés par le dispositif de la figure 1,

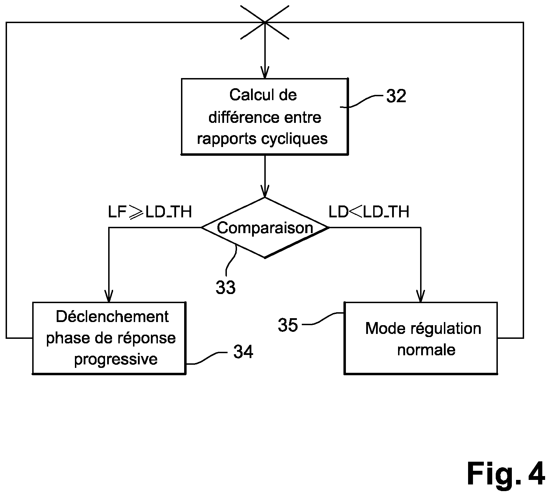

- la figure 4 est un schéma-blocs illustrant différentes étapes du procédé mis en œuvre sur le dispositif de la figure 1, et
- les figures 5 et 6 illustrent la variation du rapport cyclique de signaux d'excitation en fonction du temps, pour deux modes de fonctionnement du dispositif de la figure 1.

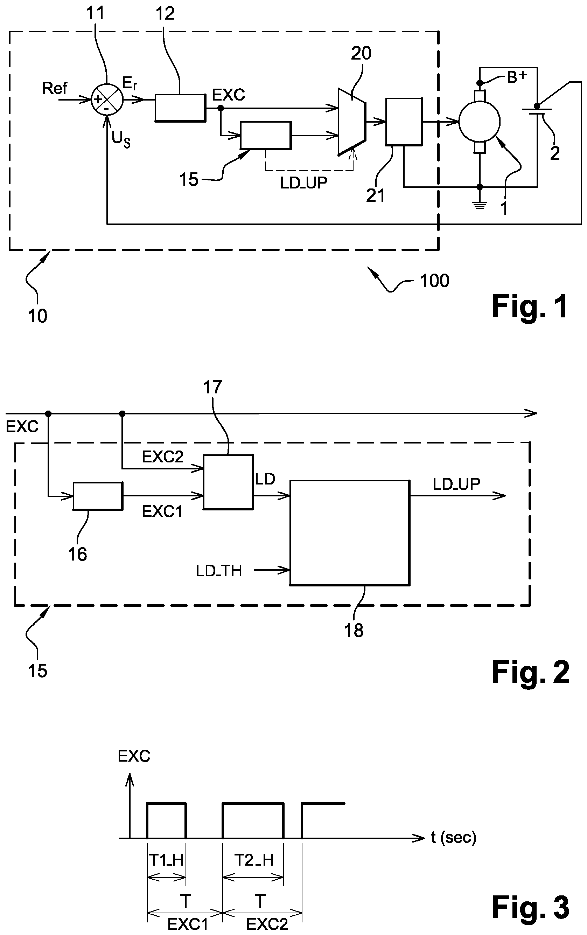

On a représenté sur la figure 1 un ensemble 100 pour véhicule automobile comportant une machine électrique tournante polyphasée 1 formée, dans l'exemple considéré, par un alternateur.

Cet alternateur 1 est capable d'être entraîné en rotation par un moteur à combustion interne du véhicule automobile pour produire de l'énergie électrique.

De manière connue en soi, l'alternateur 1 comporte, d'une part, un stator comprenant des enroulements formant dans l'exemple décrit trois phases, et d'autre part, un rotor comprenant un enroulement d'excitation.

En variante, la machine 1 peut être un alterno-démarreur.

L'alternateur 1 est relié à une batterie 2 embarquée sur le véhicule.

L'ensemble 100 comprend en outre un dispositif de commande 10 de l'alternateur 1, lequel est capable de fournir un courant électrique dont l'intensité varie en fonction de signaux ou impulsions d'excitation EXC générés par ce dispositif de commande 10.

Un rapport cyclique DC1 ; DC2 est associé à chaque signal d'excitation EXC.

La figure 3 montre des signaux d'excitation EXC.

Le rapport cyclique DC1 ; DC2 d'un signal d'excitation EXC1 ; EXC2 est donné respectivement par le rapport :

$$DC1 = (T1\_H / T)*100$$

où T est la période du signal EXC1 et T1_H est la durée durant laquelle l'amplitude du signal EXC1 est haut,

$$DC2 = (T2\_H / T)*100$$

où T est la période du signal EXC2 identique à celle du signal EXC1 et T2_H est le temps durant lequel l'amplitude du signal EXC2 est haut.

On désigne par LD la différence entre les valeurs de rapport cyclique de deux signaux ou impulsions d'excitation consécutifs EXC1 et EXC2.

Ainsi

$$LD (\%) = DC2 - DC1$$

Le dispositif 10 comporte un amplificateur différentiel 11 agencé pour délivrer une information d'erreur Er représentative de la différence entre une consigne Ref et une valeur de tension Us à une borne B+ de l'alternateur 1 reliée à la batterie 2.

Le dispositif 10 comprend en outre un générateur de signaux d'excitation 12 agencé pour délivrer des signaux d'excitation EXC dont le rapport cyclique DC1 ; DC2 varie en fonction de l'information d'erreur Er fournie par l'amplificateur différentiel 11.

Le générateur 12 est de type à modulation de largeur d'impulsions ou PWM (en anglais *Pulse Width Modulation*).

Un module 15 est prévu dans le dispositif 10 pour comparer la différence LD entre les valeurs de rapport cyclique DC1 et DC2 de deux signaux d'excitation consécutifs EXC1 et EXC2 provenant du générateur de signaux 12, à un seuil prédéterminé LD_TH et, si la valeur LD est supérieure au seuil LD_TH, initier une phase de réponse progressive durant laquelle le rapport cyclique des signaux d'excitation EXC est augmenté progressivement.

Comme on peut le voir sur la figure 2, le module 15 comporte une mémoire 16 pour mémoriser des données liées au signal EXC1, et un soustracteur 17 pour délivrer une information représentative de la différence LD obtenue à partir des signaux successifs EXC1 provenant de la mémoire 16, et EXC2.

Le module 15 est pourvu d'un comparateur 18 pour comparer la différence LD avec le seuil LD_TH prédéterminé et fournir un signal LD_UP représentant une différence LD supérieure au seuil LD_TH.

Comme visible sur la figure 1, le module 15 est agencé pour commander un multiplexeur 20 du dispositif 10 de manière à :

- si le comparateur 18 détecte une différence LD supérieure au seuil LD_TH de déclenchement d'une phase de réponse progressive durant laquelle le rapport cyclique des signaux d'excitation est augmenté progressivement, commander le multiplexeur 20 à l'aide du signal LD_UP, de sorte que celui-ci permette le déclenchement de la phase de réponse progressive,

- si la différence LD est inférieure au seuil LD_TH de déclenchement de la phase de réponse progressive, commander le multiplexeur 20 de sorte que celui-ci permette une régulation normale de l'alternateur 1.

Un étage de puissance 21 en aval du multiplexeur 20 est connecté à l'alternateur 1 pour commander celui-ci en agissant sur l'excitation du rotor de la machine, en fonction de signaux d'excitation fournis par le multiplexeur 20.

Le multiplexeur 20 permet de laisser passer sélectivement des signaux provenant du module 15 ou directement du générateur 12.

On va maintenant décrire plus en détail différentes étapes du fonctionnement du dispositif 10.

Considérons le dispositif 10 dans un état de régulation normale.

Considérons également un appel de charge généré par exemple par la mise en route d'un système de climatisation du véhicule automobile.

A l'étape 32, le dispositif 10, comme décrit plus haut, détermine la différence LD entre signaux d'excitation consécutifs et, à l'étape 33, compare cette différence LD au seuil LD_TH.

Si la valeur LD est supérieure au seuil LD_TH, le dispositif 10 déclenche la phase de réponse progressive (étape 34).

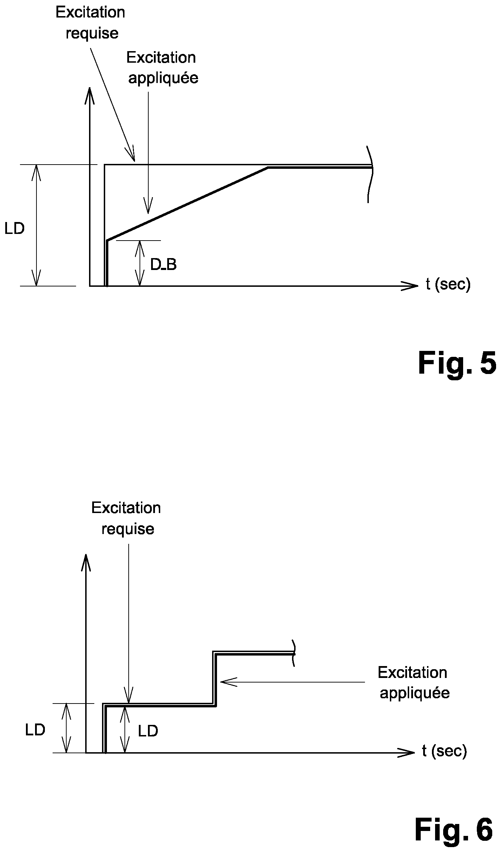

Cette phase est décrite plus précisément en référence à la figure 5.

Le seuil de déclenchement LD_TH de la phase de réponse progressive est de préférence choisi suffisamment élevé pour éviter un déclenchement de la phase de réponse progressive consécutivement à un bruit affectant les signaux d'excitation EXC.

En revanche, lorsque la valeur LD est inférieure au seuil LD_TH, le dispositif 10 n'enclenche pas la phase de réponse progressive, et le dispositif 10 régule l'alternateur 1 normalement (étape 35), comme on le verra par la suite en référence à la figure 6.

Comme illustré sur la figure 5, en début de la phase de réponse progressive (cas où l'excitation requise fait appel à une augmentation du rapport cyclique plus grand que LD_TH), le rapport cyclique de signaux d'excitation EXC consécutifs est augmenté d'un saut prédéterminé de taux D_B afin d'augmenter l'excitation dans le rotor de l'alternateur 1 et par conséquent le courant délivré par l'alternateur 1, puis le rapport cyclique des signaux EXC est augmenté de manière progressive suivant un pente sensiblement linéaire non verticale, de sorte que l'alternateur 10 délivre un courant requis pour satisfaire l'appel de charge.

Le seuil de déclenchement LD_TH de la phase de réponse progressive et le saut de rapport cyclique D_B en début de cette phase peuvent être découplés de sorte qu'il est possible de choisir aisément, avec moins de contraintes, l'amplitude de ce saut de rapport cyclique.

Par exemple le seuil de déclenchement LD_TH peut être fixé à 10% ou 20% et le saut de rapport cyclique à 7% ou 15% respectivement.

Comme illustré sur la figure 6, lorsque la différence LD est inférieure au seuil de déclenchement LD_TH de la phase de réponse progressive, le rapport cyclique est augmenté d'un saut LD correspondant à la différence LD, sans déclencher la phase de réponse progressive.

La phase de réponse progressive prend fin avantageusement lorsque la tension aux bornes de la batterie du véhicule atteint la tension de régulation souhaitée.

## Revendications

1. Procédé pour commander une machine électrique tournante (1), notamment un alternateur ou un alterno-démarreur de véhicule automobile, la machine électrique étant capable de fournir un courant électrique dont l'intensité varie en fonction de signaux d'excitation (EXC), un rapport cyclique étant associé à chaque signal d'excitation, le procédé comportant les étapes suivantes :

  - comparer la différence (LD) entre les valeurs de rapport cyclique (DC1 ; DC2) de deux signaux d'excitation consécutifs à un seuil prédéterminé,
  - si ladite différence (LD) est supérieure au seuil prédéterminé (LD_TH), déclencher une phase de réponse progressive durant laquelle le rapport cyclique des signaux d'excitation est augmenté progressivement, notamment de manière sensiblement linéaire,
  - en début de cette phase de réponse progressive, faire augmenter le rapport cyclique de signaux d'excitation consécutifs d'un saut prédéterminé (D_B), puis faire augmenter le rapport cyclique de manière progressive, le saut de rapport cyclique (D_B) en début de phase de réponse progressive étant plus faible ou égal que le seuil de déclenchement (LD_TH) de la phase de réponse progressive, ledit procédé étant **caractérisé par le fait qu'**il comporte les étapes supplémentaires suivantes :

    - détecter une différence positive entre les valeurs de rapport cyclique de deux signaux d'excitation consécutifs, cette différence étant inférieure au seuil de déclenchement (LD_TH) de la phase de réponse progressive,
    - faire augmenter le rapport cyclique d'un saut correspondant à la différence positive, sans déclencher la phase de réponse progressive.

2. Procédé selon la revendication précédente, **caractérisé par le fait que** le saut du rapport cyclique en début de phase de réponse progressive est inférieur à 4/5, notamment à ½, du seuil de déclenchement de la phase de réponse progressive.

3. Procédé selon l'une des revendications précédentes, **caractérisé par le fait que** le seuil de déclenchement (LD_TH) de la phase de réponse progressive correspond à une augmentation d'au moins 10%, notamment 20%, du rapport cyclique entre deux signaux d'excitation consécutifs.

4. Procédé selon l'une quelconque des revendications précédentes, la machine électrique tournante étant reliée électriquement à au moins un consommateur électrique, **caractérisé par le fait qu'**il comporte les étape suivantes :

    - lorsqu'un appel de charge pour alimenter le consommateur électrique est détecté, faire augmenter le rapport cyclique des signaux d'excitation,
    - comparer la différence entre les valeurs de rapport cyclique de deux signaux d'excitation consécutifs ainsi augmentées lors de l'étape précédente, au seuil prédéterminé de déclenchement (LD_TH) de la phase de réponse progressive.

5. Procédé selon l'une quelconque des revendications précédentes, **caractérisé par le fait que** le seuil de déclenchement de la phase de réponse progressive est choisi suffisamment élevé pour éviter un déclenchement de la phase de réponse progressive suite à un bruit associé aux signaux d'excitation.

6. Procédé selon l'une quelconque des revendications précédentes, la machine électrique tournante (1) étant associée à un moteur à combustion interne de véhicule automobile, **caractérisé par le fait que** la phase de réponse progressive est déclenchée uniquement lorsque la machine électrique tournante fonctionne en mode ralenti.

7. Procédé selon l'une quelconque des revendications précédentes, **caractérisé par le fait que** les signaux d'excitation utilisés pour la comparaison avec le seuil de déclenchement (LD_TH) de la phase de réponse progressive sont issus d'un filtre, notamment d'un filtre passe-bas.

**Patentansprüche**

1. Verfahren zur Steuerung einer rotierenden elektrischen Maschine (1), insbesondere eines Wechselstromgenerators oder eines Startergenerators eines Kraftfahrzeugs, wobei die elektrische Maschine in der Lage ist, einen elektrischen Strom zu liefern, dessen Stärke in Abhängigkeit von Erregungssignalen (EXC) variiert, wobei jedem Erregungssignal ein Tastverhältnis zugeordnet ist, wobei das Verfahren die folgenden Schritte umfasst:

- Vergleichen der Differenz (LD) zwischen den Werten des Tastverhältnisses (DC1; DC2) von zwei aufeinander folgenden Erregungssignalen mit einem vorbestimmten Schwellenwert,
- falls die Differenz (LD) größer als der vorbestimmte Schwellenwert (LD_TH) ist, Auslösen einer Phase allmählich zunehmender Reaktion, während der das Tastverhältnis der Erregungssignale allmählich erhöht wird, insbesondere auf eine im Wesentlichen lineare Weise,
- zu Beginn dieser Phase allmählich zunehmender Reaktion, Bewirken einer Erhöhung des Tastverhältnisses aufeinander folgender Erregungssignale um einen vorbestimmten Sprung (D_B), anschließend Bewirken einer allmählichen Erhöhung des Tastverhältnisses, wobei der Sprung des Tastverhältnisses (D_B) zu Beginn der Phase allmählich zunehmender Reaktion kleiner oder gleich dem Schwellenwert der Auslösung (LD_TH) der Phase allmählich zunehmenden Reaktion ist,

wobei das Verfahren **dadurch gekennzeichnet ist, dass** es die folgenden zusätzlichen Schritte umfasst:

- Erkennen einer positiven Differenz zwischen den Werten des Tastverhältnisses von zwei aufeinander folgenden Erregungssignalen, wobei diese Differenz kleiner als der Schwellenwert der Auslösung (LD_TH) der Phase allmählich zunehmender Reaktion ist,
- Bewirken einer Erhöhung des Tastverhältnisses um einen Sprung, welcher der positiven Differenz entspricht, ohne die Phase allmählich zunehmender Reaktion auszulösen.

2. Verfahren nach dem vorhergehenden Anspruch, **dadurch gekennzeichnet, dass** der Sprung des Tastverhältnisses zu Beginn der Phase allmählich zunehmender Reaktion kleiner als 4/5, insbesondere als ½, des Schwellenwertes der Auslösung der Phase allmählich zunehmenden Reaktion ist.

3. Verfahren nach einem der vorhergehenden Ansprüche, **dadurch gekennzeichnet, dass** der Schwellenwert der Auslösung (LD_TH) der Phase allmählich zunehmender Reaktion einer Erhöhung um wenigstens 10 %, insbesondere 20 %, des Tastverhältnisses zwischen zwei aufeinander folgenden Erregungssignalen ist.

4. Verfahren nach einem der vorhergehenden Ansprüche, wobei die rotierende elektrische Maschine mit wenigstens einem elektrischen Verbraucher elektrisch verbunden ist, **dadurch gekennzeichnet, dass** es die folgenden Schritte umfasst:

- wenn eine Ladeanforderung zum Versorgen des elektrischen Verbrauchers erkannt wird, Bewirken einer Erhöhung des Tastverhältnisses der Erregungssignale,
- Vergleichen der Differenz zwischen den Werten des Tastverhältnisses von zwei aufeinander folgenden Erregungssignalen, die somit im vorhergehenden Schritt erhöht wurden, mit dem vorbestimmten Schwellenwert der Auslösung (LD_TH) der Phase allmählich zunehmenden Reaktion.

5. Verfahren nach einem der vorhergehenden Ansprüche, **dadurch gekennzeichnet, dass** der Schwellenwert der Auslösung der Phase allmählich zunehmenden Reaktion genügend hoch gewählt wird, um eine Auslösung der Phase allmählich zunehmenden Reaktion infolge eines mit den Erregungssignalen verbundenen Rauschens zu vermeiden.

6. Verfahren nach einem der vorhergehenden Ansprüche, wobei die rotierende elektrische Maschine (1) einer Brennkraftmaschine eines Kraftfahrzeugs zugeordnet ist, **dadurch gekennzeichnet, dass** die Phase allmählich zunehmenden Reaktion ausschließlich dann ausgelöst wird, wenn die rotierende elektrische Maschine im Leerlaufmodus arbeitet.

**7.** Verfahren nach einem der vorhergehenden Ansprüche, **dadurch gekennzeichnet, dass** die Erregungssignale, die für den Vergleich mit dem Schwellenwert der Auslösung (LD_TH) der Phase allmählich zunehmenden Reaktion verwendet werden, von einem Filter stammen, insbesondere von einem Tiefpassfilter.

**Claims**

**1.** Method for controlling a rotary electric machine (1), in particular an alternator or a starter alternator for a motor vehicle, the electric machine being capable of delivering an electric current, the intensity of which varies according to excitation signals (EXC), a duty cycle being associated with each excitation signal, the method including the following steps:

- comparing the difference (LD) between the duty-cycle values (DC1; DC2) of two consecutive excitation signals with a predetermined threshold;
- if said difference (LD) is greater than the predetermined threshold (LD_TH), triggering a gradual response phase during which the duty cycle of the excitation signals is gradually increased, in particular substantially linearly;
- at the start of this gradual response phase, increasing the duty cycle of consecutive excitation signals by a predetermined jump (D_B), then increasing the duty cycle gradually, the duty-cycle jump (D_B) at the start of the gradual response phase being smaller than or equal to the threshold (LD_TH) for triggering the gradual response phase, said method being **characterized in that** it includes the following additional steps:

- detecting a positive difference between the duty-cycle values of two consecutive excitation signals, this difference being smaller than the threshold (LD_TH) for triggering the gradual response phase;
- increasing the duty cycle by a jump corresponding to the positive difference without triggering the gradual response phase.

**2.** Method according to the preceding claim, **characterized in that** the jump in the duty cycle at the start of the gradual response phase is smaller than 4/5, in particular than ½, of the threshold for triggering the gradual response phase.

**3.** Method according to either of the preceding claims, **characterized in that** the threshold (LD_TH) for triggering the gradual response phase corresponds to an increase in the duty cycle by at least 10%, in particular 20%, between two consecutive excitation signals.

**4.** Method according to any one of the preceding claims, the rotary electric machine being electrically connected to at least one electrical consumer, **characterized in that** it includes the following steps:

- when a load draw for supplying the electrical consumer with power is detected, increasing the duty cycle of the excitation signals;
- comparing the difference between the duty-cycle values of two consecutive excitation signals thus increased in the preceding step with the predetermined threshold (LD_TH) for triggering the gradual response phase.

**5.** Method according to any one of the preceding claims, **characterized in that** the threshold for triggering the gradual response phase is chosen to be high enough to avoid triggering the gradual response phase as a result of noise associated with the excitation signals.

**6.** Method according to any one of the preceding claims, the rotary electric machine (1) being associated with an internal combustion engine of a motor vehicle, **characterized in that** the gradual response phase is triggered only when the rotary electric machine is operating in idle mode.

**7.** Method according to any one of the preceding claims, **characterized in that** the excitation signals used for comparison with the threshold (LD_TH) for triggering the gradual response phase come from a filter, in particular from a low-pass filter.

**Fig. 1**

**Fig. 2**

**Fig. 3**

**Fig. 4**

Excitation
requise

Excitation
appliquée

LD

D_B

t (sec)

**Fig. 5**

Excitation
requise

Excitation
appliquée

LD

LD

t (sec)

**Fig. 6**

**RÉFÉRENCES CITÉES DANS LA DESCRIPTION**

**Documents brevets cités dans la description**

- FR 2803447
- EP 0201243 A
- EP 0106539 A
- EP 0611215 A